(19) Europäisches Patentamt / European Patent Office / Office européen des brevets

(11) **EP 3 790 185 B1**

(12) **EUROPÄISCHE PATENTSCHRIFT**

(45) Veröffentlichungstag und Bekanntmachung des Hinweises auf die Patenterteilung:
**25.10.2023  Patentblatt 2023/43**

(51) Internationale Patentklassifikation (IPC):
*H02P 21/00* (2016.01)     *H02P 21/22* (2016.01)
*H02P 21/14* (2016.01)

(21) Anmeldenummer: **20186076.4**

(52) Gemeinsame Patentklassifikation (CPC):
**H02P 21/0089; H02P 21/14; H02P 21/22**

(22) Anmeldetag: **15.07.2020**

(54) **VERFAHREN UND VORRICHTUNG ZUM BESTIMMEN VON STROMSOLLWERTEN ZUM ERZEUGEN EINES GEWÜNSCHTEN MOTORSOLLMOMENTS AN EINEM PERMANENTMAGNETERREGTEN ELEKTROMOTOR**

METHOD AND DEVICE FOR DETERMINING CURRENT SETPOINT FOR ACHIEVING A DESIRED MOTOR TORQUE SETPOINT ON A PERMANENT MAGNET ELECTRIC MOTOR

PROCÉDÉ ET DISPOSITIF DE DÉTERMINATION DES VALEURS DE CONSIGNE DE COURANT PERMETTANT DE GÉNÉRER UN COUPLE TOTAL DE MOTEUR SOUHAITÉ SUR UN MOTEUR ÉLECTRIQUE À EXCITATION PAR AIMANT PERMANENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2019  DE 102019213373**

(43) Veröffentlichungstag der Anmeldung:
**10.03.2021  Patentblatt 2021/10**

(73) Patentinhaber: **Volkswagen Aktiengesellschaft 38440 Wolfsburg (DE)**

(72) Erfinder:
• **Hallmann, Udo**
  **31246 Lahstedt (Ilsede) (DE)**
• **Bulakhov, Vadym**
  **38102 Braunschweig (DE)**

(56) Entgegenhaltungen:
**DE-A1-102013 222 539     DE-A1-102015 214 555**

EP 3 790 185 B1

**Beschreibung**

Die Erfindung betrifft ein Verfahren und eine Vorrichtung zum Bestimmen von Stromsollwerten zum Erzeugen eines gewünschten Motorsollmoments an einem permanentmagneterregten Elektromotor.

Aufgrund eines höheren magnetischen Leitwerts in einer Querachse (q-Achse) im Vergleich zu einer an einem Permanentmagneten orientierten Längsachse (d-Achse) lässt sich bei Synchronmaschinen mit eingebetteten Magneten neben einem synchronen Permanentflussmoment ein Reluktanzmoment nutzen, welches insbesondere im Feldschwächebereich zum Tragen kommt. Durch das zusätzliche Reluktanzmoment kann die Maschine mit vergleichsweise weniger Magnetmaterial ausgelegt werden, wodurch sich Materialkosten reduzieren lassen.

Für die Erzeugung eines Motorsollmoments an einem permanentmagneterregten Elektromotor müssen zwei Stromsollwerte in Feldkoordinaten (q-Strom, d-Strom) bestimmt werden. Für eine optimale Ausnutzung einer Zwischenkreisspannung eines zum Betreiben des Elektromotors verwendeten Zwischenkreises wird hierbei oft eine Regelung eingesetzt, die den d-Strom als Stellgröße verwendet.

Aus der DE 10 2013 222 539 A1 ist ein Verfahren zum Betreiben einer permanenterregten Synchronmaschine bekannt, bei dem in einem rotorfesten Koordinatensystem ein drehmomentbildender Strom und ein magnetfeldschwächender Strom geregelt werden, wobei das Verfahren eine genaue und präzise Regelung auch bei schnellen und dynamischen Vorgängen erlauben soll. Hierzu ist vorgesehen, dass zu einem vorgegebenen Drehmomentwunsch ein Betriebspunkt der Synchronmaschine mit einem zugehörigen Wert des drehmomentbildenden Stromes bestimmt wird, in dem der magnetfeldschwächende Strom einen möglichst geringen Wert hat.

Aus der DE 10 2015 214 555 A1 sind ein Fortbewegungsmittel, eine Vorrichtung sowie ein Verfahren zur Ermittlung eines Stromsollvektors für einen Synchronmotor einer elektromechanischen Lenkung bekannt. Das Verfahren umfasst die Schritte: Auslesen eines ersten Kennfeldes aus einem Speicher, welches eine Abhängigkeit eines d-Stromes von einem Sollmoment des Synchronmotors und von einer Temperatur des Synchronmotors beschreibt, Auslesen eines zweiten Kennfeldes aus einem Speicher, welches eine Abhängigkeit des d-Stromes von einer Drehzahl des Synchronmotors und von einer Zwischenkreisspannung zum Betrieb des Synchronmotors beschreibt, und Ermitteln eines ersten d-Stromsollvektors mittels des ersten Kennfeldes und des zweiten Kennfeldes.

Der Erfindung liegt die Aufgabe zu Grunde, ein Verfahren und eine Vorrichtung zum Bestimmen von Stromsollwerten zum Erzeugen eines gewünschten Motorsollmoments an einem permanentmagneterregten Elektromotor zu verbessern.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Bestimmen von Stromsollwerten zum Erzeugen eines gewünschten Motorsollmoments an einem permanentmagneterregten Elektromotor zur Verfügung gestellt, wobei mittels einer Steuereinrichtung:

- ein aktueller Betriebspunkt und das gewünschte Motorsollmoment erhalten werden,
- betriebspunktabhängig ein Koeffizient für einen Permanentflussmomentanteil bestimmt wird,
- mittels des bestimmten Koeffizienten aus dem gewünschten Motorsollmoment ein Permanentflussmoment und ein Reluktanzmoment bestimmt werden,
- ausgehend von dem bestimmten Permanentflussmoment ein drehmomentbildender Stromsollwert bestimmt wird,
- ausgehend von dem bestimmten Reluktanzmoment ein magnetfeldschwächender Stromsollwert bestimmt wird, und
- die bestimmten Stromsollwerte zum Regeln bereitgestellt werden.

Ferner wird insbesondere eine Vorrichtung zum Bestimmen von Stromsollwerten zum Erzeugen eines gewünschten Motorsollmoments an einem permanentmagneterregten Elektromotor geschaffen, umfassend eine Steuereinrichtung, wobei die Steuereinrichtung dazu eingerichtet ist,

- einen aktuellen Betriebspunkt und das gewünschte Motorsollmoment zu erhalten,
- betriebspunktabhängig einen Koeffizient für einen Permanentflussmomentanteil zu bestimmen,
- mittels des bestimmten Koeffizienten aus dem gewünschten Motorsollmoment ein Permanentflussmoment und ein Reluktanzmoment zu bestimmen,
- ausgehend von dem bestimmten Permanentflussmoment einen drehmomentbildenden Stromsollwert zu bestimmen,
- ausgehend von dem bestimmten Reluktanzmoment einen magnetfeldschwächenden Stromsollwert zu bestimmen, und
- die bestimmten Stromsollwerte zum Regeln bereitzustellen.

Das Verfahren und die Vorrichtung ermöglichen es, betriebspunktabhängig einen drehmomentbildenden Sollstrom (d-Strom) und einen magnetfeldschwächenden Sollstrom (q-Strom) zu bestimmen, insbesondere zu berechnen. Dies erfolgt, indem betriebspunktabhängig ein Koeffizient für ein Permanentflussmomentanteil bestimmt wird. Der Permanentflussmomentanteil gibt an, wie groß ein Anteil des Permanentflussmoments an einem Gesamtmoment ist. Mittels des Koeffizienten kann daher auch ein Anteil des Reluktanzmoments am Gesamtmoment bestimmt werden. Mittels des bestimmten Koeffizienten werden für ein erhaltenes gewünschtes Motormoment ein Permanentflussmoment und ein Reluktanzmoment bestimmt, insbesondere berechnet. Ausgehend von dem bestimmten Permanentflussmoment wird der drehmomentbildende Stromsollwert (q-Strom) bestimmt. Dies erfolgt insbesondere unter Verwendung einer Motormomentgleichung für den Elektromotor. Entsprechend wird ausgehend von dem bestimmten Reluktanzmoment der magnetfeldschwächende Stromsollwert (d-Strom) bestimmt. Die derart bestimmten Stromsollwerte werden zum Regeln bereitgestellt, beispielsweise indem diese als entsprechende Stromsollwertsignale ausgegeben werden. Das Regeln des Motormoments des Elektromotors kann dann mittels eines Regelkreises in an sich bekannter Weise erfolgen.

Der Vorteil des Verfahrens und der Vorrichtung ist, dass die Stromsollwerte betriebspunktabhängig bereitgestellt werden. Durch den betriebspunktabhängig bestimmten Koeffizienten kann das Bestimmen hierbei derart ausgelegt werden, dass für jeden Betriebspunkt ohne großen Aufwand wirkungsgradoptimale Stromsollwerte bereitgestellt werden.

Eine im Zusammenhang mit dem Elektromotor und dieser Offenbarung als Moment bezeichnete Größe ist insbesondere ein Drehmoment.

Ein Betriebspunkt umfasst insbesondere aktuelle Werte für eine Zwischenkreisspannung in einem zum Betreiben des Elektromotors verwendeten Zwischenkreis und eine Motorwinkelgeschwindigkeit. Betriebspunkte decken hierbei insbesondere mögliche Bereiche von Betriebspunkten bzw. Leistungsbereiche des Elektromotors ab. Ein aktueller Betriebspunkt kann beispielsweise mittels einer geeigneten Sensorik an einem Zwischenkreis (Zwischenkreisspannung) bzw. dem Elektromotor (Motorwinkelgeschwindigkeit) erfasst werden. Zugehörige Sensordaten werden der Steuereinrichtung zugeführt.

Zum Bestimmen der Stromsollwerte aus dem Permanentflussmoment und dem Reluktanzmoment kann beispielsweise die folgende Motormomentgleichung für das Motormoment M verwendet werden:

$$M = 3/2 * Z_p * I_q (\Psi_{pm} + (L_d - L_q) * I_d) = K * \Psi_{pm} * I_q + K * (L_d - L_q) * I_d * I_q$$

wobei $Z_p$ eine Polpaaranzahl des Elektromotors, $\psi_{pm}$ ein Permanentfluss, $(L_d - L_q)$ eine aufgrund der (magnetischen) Asymmetrie des Elektromotors hervorgerufene Induktivitätsdifferenz des Elektromotors, $I_q$ ein drehmomentbildender Strom, $I_d$ ein magnetfeldschwächender Strom und K ein Konstruktionsfaktor des Elektromotors ist (wobei $K = 3/2 * Z_p$).

Hierbei ergibt sich für das Permanentflussmoment $M_{pm}$:

$$M_{pm} = K * \Psi_{pm} * I_q$$

und für das Reluktanzmoment $M_{reluktanz}$:

$$M_{reluktanz} = K * (L_d - L_q) * I_d * I_q$$

Für den Koeffizienten ergibt sich:

$$K_{pm} = M_{pm} / M$$

Die beschriebene Motormomentgleichung ist lediglich ein einfaches Beispiel und kann prinzipiell auch anders, insbesondere komplexer, ausgestaltet sein. Beispielsweise können die Induktivitäten $L_d$ und $L_q$ und damit auch die Induktivitätsdifferenz $(L_d - L_q)$ ebenfalls betriebspunktabhängig sein.

Ferner gilt für die Spannungen insbesondere:

$$U_d = R_s * I_d + L_d * (d/dt) I_d - \omega * L_q * I_q$$

$$U_q = R_s * I_q + L_q * (d/dt) I_q + \omega * L_d * I_d + \omega * \Psi_{pm}$$

3

mit der Einschränkung vom Zwischenkreis:

$$U_d{}^2 + U_q{}^2 \leq V_{DC}{}^2/3$$

wobei $R_s$ ein Widerstand, $U_d$ die Stator-Spannung der d-Achse, $U_q$ die Stator-Spannung der q-Achse, $\omega$ eine Motorwinkelgeschwindigkeit und $V_{DC}$ eine Zwischenkreisspannung ist.

Das Verfahren wird mittels der Steuereinrichtung ausgeführt. Die Steuereinrichtung kann als eine Kombination von Hardware und Software ausgebildet sein, beispielsweise als Programmcode, der auf einem Mikrocontroller oder Mikroprozessor ausgeführt wird.

Es ist vorgesehen, dass zum Bestimmen des Koeffizienten ein betriebspunktabhängiges Kennfeld verwendet wird.

In einer Ausführungsform ist vorgesehen, dass zum Bestimmen des maximal umsetzbaren Motormoments ein betriebspunktabhängiges Kennfeld verwendet wird.

Hierdurch kann für jeden oder eine vorgegebene Anzahl an Betriebspunkt(en) jeweils eine optimale Lösung für das maximal umsetzbare Motormoment und/oder den Koeffizienten berechnet und in den Kennfeldern hinterlegt werden. Bei Anwendung des Verfahrens müssen die betriebspunktoptimalen Werte für das maximal umsetzbare Motormoment und/oder den Koeffizienten nur aus dem jeweiligen Kennfeld abgerufen bzw. ausgelesen werden. Hierdurch kann eine zum Ausführen des Verfahrens in der Steuereinrichtung notwendige Rechenleistung reduziert werden.

Die Kennfelder können beispielsweise für eine Auswahl (z.B. 300 bis 400) an Betriebspunkten, d.h. beispielsweise jeweils aus Werten für eine Zwischenkreisspannung und eine Motorwinkelgeschwindigkeit gebildeten Paaren, durch Lösen der oben beispielhaft beschriebenen Motormomentgleichung bestimmt werden. Hierzu werden beispielsweise die Ströme $I_q$, $I_d$ in der Motormomentgleichung solange variiert, bis ein resultierendes Motormoment maximiert ist. Das maximierte Motormoment bildet dann das für einen gegebenen Betriebspunkt maximal umsetzbare Motormoment. Mit Hilfe derselben Lösung wird auch der Koeffizient bestimmt. Erfolgt dies für alle Arbeitspunkte, so können hieraus ein betriebspunktabhängiges Kennfeld für das maximal umsetzbare Motormoment und ein betriebspunktabhängiges Kennfeld für den Koeffizienten erzeugt werden.

Es kann ferner vorgesehen sein, dass die derart bestimmten Kennfelder während einer Anwendung des Verfahrens weiter bzw. wiederholt optimiert werden, indem beispielsweise empirisch erfasste Messdaten durch Anpassen der Kennfelder berücksichtigt werden. Ferner können auch Verfahren des Maschinenlernens zum Einsatz kommen, um die Kennfelder zu erstellen oder zu optimieren.

In einer Ausführungsform ist vorgesehen, dass mittels der Steuereinrichtung ferner betriebspunktabhängig ein maximal umsetzbares Motormoment bestimmt wird, wobei das erhaltene gewünschte Motorsollmoment auf das bestimmte maximal umsetzbare Motormoment begrenzt wird. Das maximal umsetzbare Motormoment ist insbesondere das Motormoment, das bei einem gegebenen Betriebspunkt maximal mit dem Elektromotor erreicht werden kann. Hierdurch kann ein Wirkungsgrad des Elektromotors bei gegebenen Betriebspunkt weiter verbessert werden. Insbesondere wird der Koeffizient hierzu in Abhängigkeit des maximal umsetzbaren Motormoments $M_{max}$ bestimmt:

$$K_{pm} = M_{pm} / M_{max}$$

Für einen gegebenen Betriebspunkt bleibt der Koeffizient dann unabhängig von dem gewünschten Motorsollmoment der gleiche. Hierdurch lässt sich insbesondere ein guter Kompromiss zwischen einem hohem Wirkungsgrad und einer zum Bestimmen des Koeffizienten benötigten Rechenleistung der Steuereinrichtung realisieren.

In einer weiterbildenden Ausführungsform ist vorgesehen, dass das betriebspunktabhängige Kennfeld für das maximal umsetzbare Motormoment und/oder das betriebspunktabhänge Kennfeld für den Koeffizienten temperaturabhängig sind. Hierdurch kann zusätzlich auch ein Temperatureinfluss berücksichtigt werden. Eine wirkungsgradoptimierte Bereitstellung der Stromsollwerte kann hierdurch weiter verbessert werden.

In einer Ausführungsform ist vorgesehen, dass mittels der Steuereinrichtung ein Limitierungsfaktor erhalten wird und das gewünschte Motorsollmoment durch den Limitierungsfaktor begrenzt wird. Hierdurch kann zusätzlich ein Bauteilschutz bzw. Motorschutz zur Verfügung gestellt werden, durch den der Elektromotor nur mit einer verringerten Leistung betrieben wird. Der Limitierungsfaktor umfasst insbesondere einen Wertebereich von 0 bis 1 und kann beispielsweise in Form einer Prozentangabe vorgegeben werden (z.B. 80 %...).

In einer Ausführungsform ist vorgesehen, dass ein Wert für einen Permanentfluss vor dem Bestimmen der Stromsollwerte in Abhängigkeit einer erhaltenen Motortemperatur korrigiert wird. Hierdurch kann das Bereitstellen von wirkungsgradoptimierten Stromsollwerten weiter verbessert werden. Insbesondere kann vorgesehen sein, dass hierzu eine, beispielsweise in einem einfachen Fall lineare, temperaturabhängige Kennlinie verwendet wird.

In einer Ausführungsform ist vorgesehen, dass ein Wert für eine Induktivitätsdifferenz in Abhängigkeit eines erhaltenen drehmomentbildenden Stromistwerts und eines erhaltenen magnetfeldschwächenden Stromistwerts bestimmt wird. Hierdurch kann das Bereitstellen von wirkungsgradoptimierten Stromsollwerten weiter verbessert werden. Die Induktivitätsdifferenz wird insbesondere zum Berechnen der Sollstromwerte mit Hilfe der beschriebenen Motormomentgleichung verwendet.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird insbesondere auch ein Kraftfahrzeug geschaffen, umfassend mindestens eine Vorrichtung nach einer der beschriebenen Ausführungsformen.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Bestimmen von Stromsollwerten zum Erzeugen eines gewünschten Motorsollmoments an einem permanentmagneterregten Elektromotor;

Fig. 2    ein schematisches Signalflussdiagramm zur Verdeutlichung einer Ausführungsform des Verfahrens zum Bestimmen von Stromsollwerten zum Erzeugen eines gewünschten Motorsollmoments an einem permanentmagneterregten Elektromotor.

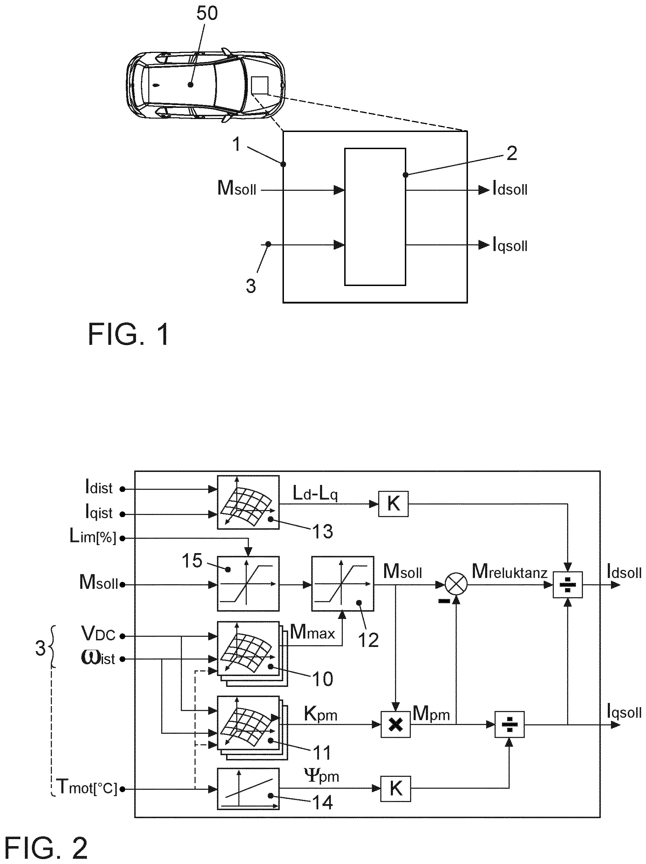

In Fig. 1 ist eine schematische Darstellung einer Ausführungsform der Vorrichtung 1 zum Bestimmen von Stromsollwerten $I_{dsoll}$, $I_{qsoll}$ zum Erzeugen eines gewünschten Motorsollmoments $M_{soll}$ an einem permanentmagneterregten Elektromotor gezeigt.

Die Vorrichtung 1 ist beispielsweise in einem Kraftfahrzeug 50 angeordnet und dient dort beispielsweise dem Bereitstellen von Sollstromwerten $I_{dsoll}$, $I_{qsoll}$ zum Regeln eines Unterstützungsmoments eines Elektromotors einer Servolenkung (nicht gezeigt) des Kraftfahrzeugs 50.

Die Vorrichtung 1 umfasst eine Steuereinrichtung 2, welche als eine Kombination von Hardware und Software ausgebildet ist, beispielsweise als Programmcode, der auf einem Mikrocontroller oder Mikroprozessor ausgeführt wird.

Der Steuereinrichtung 2 wird ein aktueller Betriebspunkt 3 des Elektromotors und das gewünschte Motorsollmoment $M_{soll}$ zugeführt. Der Betriebspunkt 3 umfasst aktuelle Werte für eine Zwischenkreisspannung und eine Motorwinkelgeschwindigkeit.

Die Steuereinrichtung 2 bestimmt in Abhängigkeit des Betriebspunktes 3 einen Koeffizienten für einen Permanentflussmomentanteil an dem Motorsollmoment $M_{soll}$.

Mittels des bestimmten Koeffizienten bestimmt die Steuereinrichtung 2 aus dem gewünschten Motorsollmoment $M_{soll}$ ein Permanentflussmoment und ein Reluktanzmoment.

Ausgehend von dem bestimmten Permanentflussmoment bestimmt die Steuereinrichtung 2 einen drehmomentbildenden Stromsollwert $I_{qsoll}$. Ausgehend von dem bestimmten Reluktanzmoment bestimmt die Steuereinrichtung 2 einen magnetfeldschwächenden Stromsollwert $I_{dsoll}$. Das Bestimmen erfolgt beispielsweise unter Verwendung der voranstehend in der allgemeinen Beschreibung beschriebenen Motormomentgleichung.

Die bestimmten Sollmomente $I_{dsoll}$, $I_{qsoll}$ werden zum Regeln bereitgestellt. Das Regeln erfolgt in an sich bekannter Weise mittels eines Regelkreises (nicht dargestellt).

Es ist insbesondere vorgesehen, dass die Steuereinrichtung 2 in Abhängigkeit des Betriebspunktes 3 ein maximal umsetzbares Motormoment bestimmt. Die Steuereinrichtung 2 begrenzt das erhaltene gewünschte Motorsollmoment $M_{soll}$ auf das bestimmte maximal umsetzbare Motormoment.

In Fig. 2 ist ein schematisches Signalflussdiagramm zur Verdeutlichung einer Ausführungsform des Verfahrens zum Bestimmen von Stromsollwerten $I_{dsoll}$, $I_{qsoll}$ zum Erzeugen eines gewünschten Motorsollmoments $M_{soll}$ an einem permanentmagneterregten Elektromotor gezeigt. Das Verfahren wird mittels einer Steuereinrichtung 2 ausgeführt.

In Abhängigkeit eines aktuellen Betriebspunktes 3, der eine aktuelle Zwischenkreisspannung $V_{DC}$ und eine aktuelle Motorwinkelgeschwindigkeit $\omega_{ist}$ umfasst, wird ein maximal umsetzbares Motormoment $M_{max}$ bestimmt. Das Bestimmen erfolgt auf Grundlage eines Kennfeldes 10, in dem für unterschiedliche Betriebspunkte 3 jeweils zugehörige maximal umsetzbare Motormomente $M_{max}$ hinterlegt sind. Das Kennfeld 10 ist beispielsweise in einem Speicher der Steuereinrichtung hinterlegt. Findet sich in dem hinterlegten Kennfeld 10 zu einem aktuellen Betriebspunkt 3 kein zugehöriger Wert für das maximal umsetzbare Motormoment $M_{max}$, so kann ein Wert ausgehend von benachbarten Betriebspunkten interpoliert werden.

Ferner wird ausgehend von dem aktuellen Betriebspunkt 3 ein Koeffizient $K_{pm}$ für einen Permanentflussmomentanteil bestimmt. Das Bestimmen erfolgt auf Grundlage eines Kennfeldes 11, in dem für unterschiedliche Betriebspunkte 3 jeweils zugehörige Koeffizienten $K_{pm}$ hinterlegt sind. Das Kennfeld 11 ist beispielsweise in einem Speicher der Steuereinrichtung hinterlegt. Findet sich in dem hinterlegten Kennfeld 11 zu einem aktuellen Betriebspunkt 3 kein zugehöriger Wert für den Koeffizienten $K_{pm}$, so kann ein Wert ausgehend von benachbarten Betriebspunkten interpoliert werden.

Die Kennfelder 10, 11 werden vor Durchführen des Verfahrens durch numerisches Lösen der bereits beschriebenen Motormomentgleichung für verschiedene Betriebspunkte erzeugt und bereitgestellt.

Ein gewünschtes Motorsollmoment $M_{soll}$ wird durch das bestimmte maximal umsetzbare Motormoment $M_{max}$ mittels eines Begrenzers 12 begrenzt, das heißt das gewünschte Motorsollmoment $M_{soll}$ wird auf den Wert des maximal umsetzbaren Motormoments $M_{max}$ gesetzt, sofern das gewünschte Motorsollmoment $M_{soll}$ das maximal umsetzbare Motormoment $M_{max}$ überschreitet. Anderenfalls bleibt der Wert des gewünschten Motorsollmoments $M_{soll}$ gleich.

Mit Hilfe des bestimmten Koeffizienten $K_{pm}$ wird aus dem (gegebenenfalls begrenzten) gewünschten Motorsollmoment $M_{soll}$ ein Permanentflussmoment $M_{pm}$ und ein Reluktanzmoment $M_{reluktanz}$ bestimmt. Zum Berechnen des Permanentflussmoments $M_{pm}$ wird das (gegebenenfalls begrenzte) gewünschte Motorsollmoment $M_{soll}$ mit dem Koeffizienten $K_{pm}$ multipliziert. Durch Subtraktion des Multiplikationsergebnisses von dem gewünschten Motorsollmoment $M_{soll}$ wird das Reluktanzmoment $M_{reluktanz}$ berechnet.

Mit Hilfe der bereits beschriebenen Motormomentgleichung können die Stromsollwerte $I_{dsoll}$, $I_{qsoll}$ aus dem bestimmten Permanentflussmoment $M_{pm}$ und dem bestimmten Reluktanzmoment $M_{reluktanz}$ berechnet werden. Um den Stromsollwert $I_{qsoll}$ für den drehmomentbildenden q-Strom zu erhalten, wird das bestimmte Permanentflussmoment $M_{pm}$ durch den Permanentfluss $\Psi_{pm}$ und den Konstruktionsfaktor K geteilt. Um den Stromsollwert $I_{dsoll}$ für den magnetfeldschwächenden d-Strom zu erhalten, wird das bestimmte Reluktanzmoment $M_{reluktanz}$ durch die Induktivitätsdifferenz $(L_d - L_q)$ und den Konstruktionsfaktor K geteilt.

Hierbei kann vorgesehen sein, dass ein Wert für eine Induktivitätsdifferenz $(L_d - L_q)$ in Abhängigkeit eines erhaltenen drehmomentbildenden Stromistwerts $I_{qist}$ und eines erhaltenen magnetfeldschwächenden Stromistwerts $I_{dist}$ bestimmt wird. Insbesondere kann dies auf Grundlage eines Kennfeldes 13 erfolgen.

Ferner kann vorgesehen sein, dass ein Wert für den Permanentfluss $\psi_{pm}$ vor dem Bestimmen der Stromsollwerte $I_{dsoll}$, $I_{qsoll}$ in Abhängigkeit einer erhaltenen Motortemperatur $T_{mot}$ korrigiert wird. Dies erfolgt beispielsweise mit Hilfe einer Kennlinie 14.

Es kann weiter vorgesehen sein, dass auch die Kennfelder 10, 11 temperaturabhängig sind. Der Betriebspunkt 3 umfasst in diesem Fall zusätzlich auch die Motortemperatur $T_{mot}$.

Es kann vorgesehen sein, dass ein Limitierungsfaktor Lim erhalten wird und das gewünschte Motorsollmoment $M_{soll}$ durch den Limitierungsfaktor Lim begrenzt wird. Hierdurch kann zusätzlich ein Bauteilschutz bzw. Motorschutz zur Verfügung gestellt werden, durch den der Elektromotor nur mit einer verringerten Leistung betrieben wird. Der Limitierungsfaktor Lim umfasst insbesondere einen Wertebereich von 0 bis 1 und kann beispielsweise als Prozentangabe (0 bis 100 %) erhalten werden. Das Begrenzen durch den Limitierungsfaktor Lim erfolgt in einem Begrenzer 15.

**Bezugszeichenliste**

| | |
|---|---|
| 1 | Vorrichtung |
| 2 | Steuereinrichtung |
| 3 | Betriebszustand |
| 10 | Kennfeld |
| 11 | Kennfeld |
| 12 | Begrenzer |
| 13 | Kennfeld |
| 14 | Kennlinie |
| 15 | Begrenzer |
| $M_{soll}$ | Motorsollmoment |
| $I_{dsoll}$ | Stromsollwert (d-Strom) |
| $I_{qsoll}$ | Stromsollwert (q-Strom) |
| $L_d - L_q$ | Induktivitätsdifferenz |
| $\omega_{ist}$ | Motorwinkelgeschwindigkeit |
| $V_{DC}$ | Zwischenkreisspannung |
| $M_{max}$ | maximal umsetzbares Motormoment |
| $K_{pm}$ | Koeffizient (Permanentflussmomentanteil) |
| $M_{pm}$ | Permanentflussmoment |
| $M_{reluktanz}$ | Reluktanzmoment |
| $\psi_{pm}$ | Permanentfluss |
| $I_{qist}$ | Stromistwert (q-Strom) |
| $I_{dist}$ | Stromistwert (d-Strom) |

$T_{mot}$      Motortemperatur


**Patentansprüche**

1.  Verfahren zum Bestimmen von Stromsollwerten ($I_{qsoll}$, $I_{dsoll}$) zum Erzeugen eines gewünschten Motorsollmoments ($M_{soll}$) an einem permanentmagneterregten Elektromotor, wobei das gewünschte Motorsollmoment ($M_{soll}$) die Summe aus einem Permanentflussmoment ($M_{pm}$) und einem Reluktanzmoment ($M_{reluktanz}$) ist, wobei mittels einer Steuereinrichtung (2):

    - ein aktueller Betriebspunkt (3) und das gewünschte Motorsollmoment ($M_{soll}$) erhalten werden,
    - betriebspunktabhängig ein Koeffizient ($K_{pm}$) für einen Permanentflussmomentanteil bestimmt wird, wobei zum Bestimmen des Koeffizienten ($K_{pm}$) ein betriebspunktabhängiges Kennfeld (11) verwendet wird, wobei in dem Kennfeld (11) für unterschiedliche Betriebspunkte (3) zugehörige Koeffizienten ($K_{pm}$) hinterlegt sind, wobei diese Koeffizienten ($K_{pm}$) vorab durch numerisches Lösen der Motormomentgleichung für verschiedene Betriebspunkte erzeugt wurden,
    - mittels des bestimmten Koeffizienten ($K_{pm}$) aus dem gewünschten Motorsollmoment ($M_{soll}$) das Permanentflussmoment ($M_{pm}$) und das Reluktanzmoment ($M_{reluktanz}$) bestimmt werden,
    - ausgehend von dem bestimmten Permanentflussmoment ($M_{pm}$) ein drehmomentbildender Stromsollwert ($I_{qsoll}$) bestimmt wird,
    - ausgehend von dem bestimmten Reluktanzmoment ($M_{reluktanz}$) ein magnetfeldschwächender Stromsollwert ($I_{dsoll}$) bestimmt wird, und
    - die bestimmten Stromsollwerte ($I_{qsoll}$, $I_{dsoll}$) zum Regeln bereitgestellt werden.

2.  Verfahren nach Anspruch 1, **dadurch gekennzeichnet, dass** mittels der Steuereinrichtung (2) ferner:

    - betriebspunktabhängig ein maximal umsetzbares Motormoment ($M_{max}$) bestimmt wird,
    - das erhaltene gewünschte Motorsollmoment ($M_{soll}$) auf das bestimmte maximal umsetzbare Motormoment ($M_{max}$) begrenzt wird.

3.  Verfahren nach Anspruch 2, **dadurch gekennzeichnet, dass** zum Bestimmen des maximal umsetzbaren Motormoments ($M_{max}$) ein betriebspunktabhängiges Kennfeld (10) verwendet wird.

4.  Verfahren nach Anspruch 3, **dadurch gekennzeichnet, dass** das betriebspunktabhängige Kennfeld (10) für das maximal umsetzbare Motormoment ($M_{max}$) und/oder das betriebspunktabhänge Kennfeld (11) für den Koeffizienten ($K_{pm}$) temperaturabhängig sind.

5.  Verfahren nach einem der vorangegangenen Ansprüche, **dadurch gekennzeichnet, dass** mittels der Steuereinrichtung (2) ein Limitierungsfaktor (Lim) erhalten wird und das gewünschte Motorsollmoment ($M_{soll}$) durch den Limitierungsfaktor (Lim) begrenzt wird.

6.  Verfahren nach einem der vorangegangenen Ansprüche, **dadurch gekennzeichnet, dass** ein Wert für einen Permanentfluss ($\psi_{pm}$) vor dem Bestimmen der Stromsollwerte ($I_{qsoll}$, $I_{dsoll}$) in Abhängigkeit einer erhaltenen Motortemperatur ($T_{mot}$) korrigiert wird.

7.  Verfahren nach einem der vorangegangenen Ansprüche, **dadurch gekennzeichnet, dass** ein Wert für eine Induktivitätsdifferenz ($L_d - L_q$) in Abhängigkeit eines erhaltenen drehmomentbildenden Stromistwerts ($I_{qist}$) und eines erhaltenen magnetfeldschwächenden Stromistwerts ($I_{dist}$) bestimmt wird.

8.  Vorrichtung (1) zum Bestimmen von Stromsollwerten ($I_{qsoll}$, $I_{dsoll}$) zum Erzeugen eines gewünschten Motorsollmoments ($M_{soll}$) an einem permanentmagneterregten Elektromotor, wobei das gewünschte Motorsollmoment ($M_{soll}$) die Summe aus einem Permanentflussmoment ($M_{pm}$) und einem Reluktanzmoment ($M_{reluktanz}$) ist, umfassend:

    eine Steuereinrichtung (2),
    wobei die Steuereinrichtung (2) dazu eingerichtet ist,

    - einen aktuellen Betriebspunkt (3) und das gewünschte Motorsollmoment ($M_{soll}$) zu erhalten,
    - betriebspunktabhängig einen Koeffizient ($K_{pm}$) für einen Permanentflussmomentanteil zu bestimmen, und zum Bestimmen des Koeffizienten ($K_{pm}$) ein betriebspunktabhängiges Kennfeld (11) zu verwenden, wobei in dem Kennfeld (11) für unterschiedliche Betriebspunkte (3) zugehörige Koeffizienten ($K_{pm}$) hinterlegt sind, wobei diese Koeffizienten ($K_{pm}$) vorab durch numerisches Lösen der Motormomentgleichung für verschiedene Betriebspunkte erzeugt wurden,

- mittels des bestimmten Koeffizienten ($K_{pm}$) aus dem gewünschten Motorsollmoment ($M_{soll}$) das Permanentflussmoment ($M_{pm}$) und das Reluktanzmoment ($M_{reluktanz}$) zu bestimmen,
- ausgehend von dem bestimmten Permanentflussmoment ($M_{pm}$) einen drehmomentbildenden Stromsollwert ($I_{qsoll}$) zu bestimmen,
- ausgehend von dem bestimmten Reluktanzmoment ($M_{reluktanz}$) einen magnetfeldschwächenden Stromsollwert ($I_{dsoll}$) zu bestimmen, und
- die bestimmten Stromsollwerte ($I_{qsoll}$, $I_{dsoll}$) zum Regeln bereitzustellen.

9. Vorrichtung (1) nach Anspruch 8, **dadurch gekennzeichnet, dass** die Steuereinrichtung (2) ferner dazu eingerichtet ist,

- betriebspunktabhängig ein maximal umsetzbares Motormoment ($M_{max}$) zu bestimmen,
- das erhaltene gewünschte Motorsollmoment ($M_{soll}$) auf das bestimmte maximal umsetzbare Motormoment ($M_{max}$) zu begrenzen.

10. Kraftfahrzeug, umfassend mindestens eine Vorrichtung nach einem der Ansprüche 8 oder 9.


**Claims**

1. Method for determining current set points ($I_{qsoll}$, $I_{dsoll}$) for generating a desired target motor torque ($M_{soll}$) at a permanent-magnet-excited electric motor, wherein the desired target motor torque ($M_{soll}$) is the sum of a permanent flux torque ($M_{pm}$) and a reluctance torque ($M_{reluktanz}$), wherein by means of a control device (2):

- a present operating point (3) and the desired target motor torque ($M_{soll}$) are obtained,
- a coefficient ($K_{pm}$) is determined in an operating-point-dependent manner for a permanent flux torque component, wherein an operating-point-dependent characteristic map (11) is used for determining the coefficient ($K_{pm}$), wherein associated coefficients ($K_{pm}$) are stored in the characteristic map (11) for different operating points (3), wherein these coefficients ($K_{pm}$) were generated in advance by numerically solving the motor torque equation for different operating points,
- by means of the determined coefficient ($K_{pm}$) the permanent flux torque ($M_{pm}$) and the reluctance torque ($M_{reluktanz}$) are determined from the desired target motor torque ($M_{soll}$),
- a torque-forming current set point ($I_{qsoll}$) is determined starting from the determined permanent flux torque ($M_{pm}$),
- a magnetic-field-weakening current set point ($I_{dsoll}$) is determined starting from the determined reluctance torque ($M_{reluktanz}$), and
- the determined current set points ($I_{qsoll}$, $I_{dsoll}$) are provided for regulation.

2. Method according to claim 1, **characterized in that** by means of the control device (2):

- a maximum convertible motor torque ($M_{max}$) is also determined in an operating-point-dependent manner,
- the obtained desired target motor torque ($M_{soll}$) is also limited to the determined maximum convertible motor torque ($M_{max}$).

3. Method according to claim 2, **characterized in that** an operating-point-dependent characteristic map (10) is used for determining the maximum convertible motor torque ($M_{max}$).

4. Method according to claim 3, **characterized in that** the operating-point-dependent characteristic map (10) for the maximum convertible motor torque ($M_{max}$) and/or the operating-point-dependent characteristic map (11) for the coefficient ($K_{pm}$) are temperature-dependent.

5. Method according to any of the preceding claims, **characterized in that** a limitation factor (Lim) is obtained by means of the control device (2) and the desired target motor torque ($M_{soll}$) is limited by the limitation factor (Lim).

6. Method according to any of the preceding claims, **characterized in that** a value for a permanent flux ($\psi_{pm}$) is

corrected before determining the current set points ($I_{qsoll}$, $I_{dsoll}$) depending on an obtained motor temperature ($T_{mot}$).

7. Method according to any of the preceding claims, **characterized in that** value for an inductance difference ($L_d$ - $L_q$) is determined depending on an obtained torque-forming actual current value ($I_{qist}$) and an obtained magnetic-field-weakening actual current value ($I_{dist}$).

8. Device (1) for determining current set points ($I_{qsoll}$, $I_{dsoll}$) for generating a desired target motor torque ($M_{soll}$) at a permanent-magnet-excited electric motor, wherein the desired target motor torque ($M_{soll}$) is the sum of a permanent flux torque ($M_{pm}$) and a reluctance torque ($M_{reluktanz}$), comprising: a control device (2), wherein the control device (2) is designed

- to obtain a present operating point (3) and the desired target motor torque ($M_{soll}$),
- to determine a coefficient ($K_{pm}$) for a permanent flux torque component in an operating-point-dependent manner, and to use an operating-point-dependent characteristic map (11) to determine the coefficient ($K_{pm}$), wherein associated coefficients ($K_{pm}$) are stored in the characteristic map (11) for different operating points (3), wherein these coefficients ($K_{pm}$) were generated in advance by numerically solving the motor torque equation for different operating points,
- to determine, by means of the determined coefficient ($K_{pm}$), the permanent flux torque ($M_{pm}$) and the reluctance torque ($M_{reluktanz}$) from the desired target motor torque ($M_{soll}$),
- to determine, starting from the determined permanent flux torque ($M_{pm}$), a torque-forming current set point ($I_{qsoll}$),
- to determine, starting from the determined reluctance torque ($M_{reluktanz}$), a magnetic-field-weakening current set point ($I_{dsoll}$), and
- to provide the determined current set points ($I_{qsoll}$, $I_{dsoll}$) for regulation.

9. Device (1) according to claim 8, **characterized in that** the control device (2) is also designed

- to determine a maximum convertible motor torque ($M_{max}$) in an operating-point-dependent manner,
- to limit the obtained desired target motor torque ($M_{soll}$) to the determined maximum convertible torque ($M_{max}$).

10. Motor vehicle comprising at least one device according to claim 8 or 9.

**Revendications**

1. Procédé pour la détermination de valeurs de consigne de courant ($I_{qsoll}$, $I_{dsoll}$) pour la génération d'un couple de consigne de moteur ($M_{soll}$) souhaité sur un moteur électrique excité par aimant permanent, le couple de consigne de moteur ($M_{soll}$) souhaité étant la somme d'un couple de flux permanent ($M_{pm}$) et d'un couple de réluctance ($M_{reluktanz}$), au moyen d'un dispositif de commande (2) :

- un point de fonctionnement (3) actuel et le couple de consigne de moteur ($M_{soll}$) souhaité étant obtenus,
- un coefficient ($K_{pm}$) pour une part de couple de flux permanent étant déterminé en fonction du point de fonctionnement, un champ caractéristique (11) dépendant du point de fonctionnement étant utilisé pour la détermination du coefficient ($K_{pm}$), des coefficients ($K_{pm}$) associés étant déposés pour différents points de fonctionnement (3) dans le champ caractéristique (11), ces coefficients ($K_{pm}$) étant générés au préalable en résolvant numériquement l'équation de couple de moteur pour différents points de fonctionnement,
- le couple de flux permanent ($M_{pm}$) et le couple de réluctance ($M_{reluktanz}$) étant déterminés au moyen du coefficient ($K_{pm}$) déterminé à partir du couple de consigne de moteur ($M_{soll}$) souhaité,
- une valeur de consigne de courant ($I_{qsoll}$) formant un couple étant déterminée à partir du couple de flux permanent ($M_{pm}$) déterminé,
- une valeur de consigne de courant ($I_{qsoll}$) affaiblissant un champ magnétique étant déterminée à partir du couple de réluctance ($M_{reluktanz}$) déterminé, et
- les valeurs de consigne de courant ($I_{qsoll}$, $I_{dsoll}$) déterminées étant fournies pour la régulation.

2. Procédé selon la revendication 1, **caractérisé en ce qu'**en outre, au moyen du dispositif de commande (2) :

- un couple de moteur maximal réalisable ($M_{max}$) est déterminé en fonction du point de fonctionnement,
- le couple de consigne de moteur ($M_{soll}$) souhaité obtenu est limité au couple de moteur maximal réalisable

($M_{max}$).

3. Procédé selon la revendication 2, **caractérisé en ce qu'**un champ caractéristique (10) dépendant du point de fonctionnement est utilisé pour la détermination du couple de moteur maximal réalisable ($M_{max}$).

4. Procédé selon la revendication 3, **caractérisé en ce que** le champ caractéristique (20) dépendant du point de fonctionnement pour le couple de moteur maximal réalisable ($M_{max}$) et/ou le champ caractéristique (11) dépendant du point de fonctionnement pour le coefficient ($K_{pm}$) dépendant de la température.

5. Procédé selon l'une des revendications précédentes,
**caractérisé en ce qu'**un facteur de limitation (Lim) est obtenu au moyen du dispositif de commande (2) et que le couple de consigne de moteur ($M_{soll}$) souhaité est limité par le facteur de limitation (Lim).

6. Procédé selon l'une des revendications précédentes,
**caractérisé en ce qu'**une valeur pour un flux permanent ($\Psi_{pm}$) est corrigée en fonction d'une température du moteur ($T_{mot}$) obtenue avant la détermination des valeurs de consigne de courant ($I_{qsoll}$, $I_{dsoll}$).

7. Procédé selon l'une des revendications précédentes,
**caractérisé en ce qu'**une valeur pour une différence d'inductance ($L_d$ - $L_q$) est déterminée en fonction d'une valeur réelle de courant ($I_{qist}$) formant un couple obtenue et d'une valeur réelle de courant ($I_{dist}$) affaiblissant un champ magnétique obtenue.

8. Dispositif (1) pour la détermination de valeurs de consigne de courant ($I_{qsoll}$, $I_{dsoll}$) pour la génération d'un couple de consigne de moteur ($M_{soll}$) souhaité sur un moteur électrique excité par aimant permanent, le couple de consigne de moteur ($M_{soll}$) souhaité étant la somme d'un couple de flux permanent ($M_{pm}$) et d'un couple de réluctance ($M_{reluktanz}$), comprenant un dispositif de commande (2), le dispositif de commande (2) étant conçu pour

   - obtenir un point de fonctionnement (3) actuel et le couple de consigne de moteur ($M_{soll}$) souhaité,
   - déterminer un coefficient ($K_{pm}$) pour une part de couple de flux permanent en fonction du point de fonctionnement, et pour utiliser un champ caractéristique (11) dépendant du point de fonctionnement pour la détermination du coefficient ($K_{pm}$), des coefficients ($K_{pm}$) associés étant déposés pour différents points de fonctionnement (3) dans le champ caractéristique (11), ces coefficients ($K_{pm}$) étant générés au préalable en résolvant numériquement l'équation de couple de moteur pour différents points de fonctionnement,
   - déterminer le couple de flux permanent ($M_{pm}$) et le couple de réluctance ($M_{reluktanz}$) au moyen du coefficient ($K_{pm}$) déterminé à partir du couple de consigne de moteur ($M_{soll}$) souhaité,
   - déterminer une valeur de consigne de courant ($I_{qsoll}$) formant un couple à partir du couple de flux permanent ($M_{pm}$) déterminé,
   - déterminer une valeur de consigne de courant ($I_{qsoll}$) affaiblissant un champ magnétique à partir du couple de réluctance ($M_{reluktanz}$) déterminé, et
   - fournir les valeurs de consigne de courant ($I_{qsoll}$, $I_{dsoll}$) déterminées pour la régulation.

9. Dispositif (1) selon la revendication 8, **caractérisé en ce** le dispositif de commande (2) est en outre conçu pour

   - déterminer un couple de moteur maximal réalisable ($M_{max}$) en fonction du point de fonctionnement,
   - limiter le couple de consigne de moteur ($M_{soll}$) souhaité obtenu au couple de moteur maximal réalisable ($M_{max}$).

10. Véhicule automobile comprenant au moins un dispositif selon l'une des revendications 8 ou 9.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013222539 A1
- DE 102015214555 A1